Europäisches Patentamt

European Patent Office

Office européen des brevets

(19)

(11) Publication number: **0 056 657**
**B1**

(12) **EUROPEAN PATENT SPECIFICATION**

(45) Date of publication of patent specification: **08.05.85**

(21) Application number: **82100412.4**

(22) Date of filing: **21.01.82**

(51) Int. Cl.⁴: **B 63 H 9/06**

(54) **Sail for sailing craft and method for making same.**

(30) Priority: **21.01.81 DE 3101796**

(43) Date of publication of application:
**28.07.82 Bulletin 82/30**

(45) Publication of the grant of the patent:
**08.05.85 Bulletin 85/19**

(84) Designated Contracting States:
**DE FR GB IT NL**

(56) References cited:
**DE-A-2 926 476**
**US-A-2 565 219**
**US-A-3 903 826**

(73) Proprietor: **North Sails Surf Antilles N.V.**
**Plaza Jojo Correa 1-5 P.O. Box 897**
**Willemstad Curacao Netherlands Antilles (NL)**

(72) Inventor: **Wagner, Eckart**
**Traubinger Strasse 24**
**D-8132 Garatshausen (DE)**

(74) Representative: **Eitle, Werner, Dipl.-Ing. et al**
**Hoffmann, Eitle & Partner Patentanwälte**
**Arabellastrasse 4**
**D-8000 München 81 (DE)**

Courier Press, Leamington Spa, England.

## Description

Traditional methods for manufacturing sails include selection of the proper woven fabric or cloth, precisely cutting the cloth into a plurality of flat panels, and then sewing adjacent panels together along overlapping edges. Modern sails are typically made from special, closely united synthetic yarns, and the cutting and sewing procedure is time consuming and expensive. The finished sails are normally cut to provide a slight curve along the luff and the foot. When the sail is installed in the rigging, the luff leach and foot may be placed under tension, causing the sail to have fullness or a three dimensional curved shape necessary to give it thrust under sailing conditions.

Various attempts have been made to manufacture a sail either with a pre-formed draft or fullness, or from continuous pieces of material. Due to the limited class of commercial materials suitable for making sails, which must be flexible and yet stretch resistant, and the lack of a suitable method useful for light weight materials, these proposals have been largely unsuccessful.

U.S. Patent no. 2,565,219 describes the manufacture of a sail wherein panels of cloth are placed on the surface of a curved form, and the panels are then coated with a liquid bonding material. This method does not avoid the use of precisely cut panels or the problem of obtaining a uniform coating of bonding material that also bonds firmly to the panels. U.S. Patent no. 3,903,826 illustrates a single panel sail, which is, however, two-dimensional i.e. without fullness and formed by a bonding process. The present invention is defined in its broadest aspects by claims 1 and 2, and thus provides a sail and a method for making a sail from principally a single panel of material, thereby avoiding the necessity of cutting and joining a number of separate panels. The sail material employed is a continuous, non-porous thermoplastic, preferably thermoformable film that is preferably reinforced by thermoplastic fibers. The material is supported around its edges and then permanently formed into a three dimensional shape by elongation of a central portion thereof, preferably with the use of heat and/or pressure. Battens, attachment points and the like may be incorporated into the sail either before, during or after the forming operation.

The method of the present invention offers several advantages, including the ability to efficiently produce a large number of high quality sails very easily and quickly, and without the need for time consuming cutting and sewing operations. The material or combination of materials can be selected from those that will retain the permanent three dimensional shape while imparting superior properties. Also, suitable sail materials having desirable properties such as stretch resistance, flexibility, smoothness, tear resistance, and the like may be incorporated into a pre-formed sail, thereby greatly increasing the sailing performance and useful life of the sail.

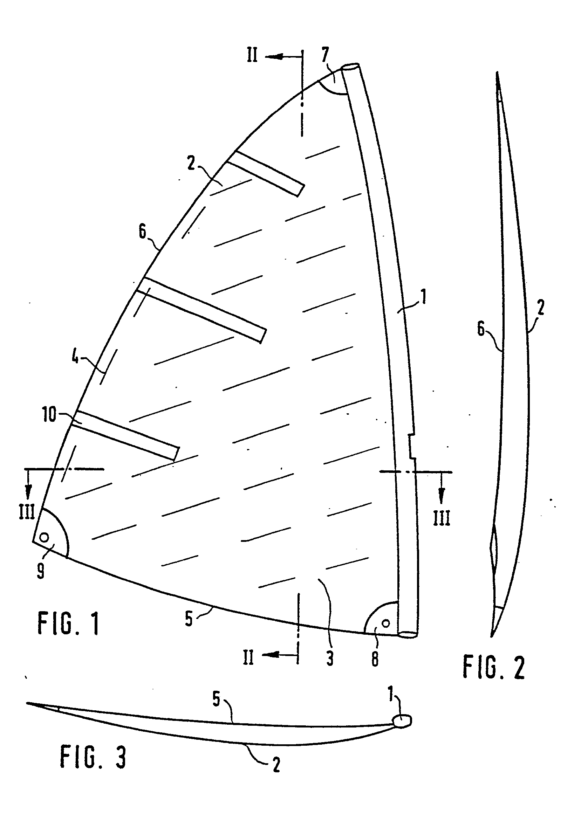

In accordance with a preferred embodiment of the present invention, a sail for sailing craft or other wind propulsion devices, as generally shown in Figures 1—3, is prepared from a single piece or sheet of material, although it will be appreciated that, less desirably, a plurality of pieces of such material could be used and joined together either before, during or after the forming operation described herein. The sail as shown in the drawings is generally triangular in shape and comprises a head 7, a tack 8 and a clew 9 at the three corners. The leading portion or luff of the sail may typically be joined to a rope or, as shown, to a tubular portion 1 that fits around a mast. Although the sail as illustrated is particularly suitable for so-called surfboard rigs, it will be appreciated that other types of sails can be made by the process of the present invention. Also, the principles of the present invention are applicable to any type of sail regardless of how it may be rigged.

The materials use to construct the sail are composed of thermoplastic materials that can be stretch formed or thermoformed without appreciable loss of stretch resistance and other mechanical properties required in a sail. For example, the use of woven cloth made of thermoplastic yarns, as the sole material, is not practical because the stretch forming process of the present invention would tend to unduly loosen the weave of the cloth, rendering it too porous and weak. The material must also be resistant to tear and degradation under normal use.

The preferred material comprises or includes a continuous, non-porous film of thermoplastic material which is used alone or is laminated or bonded to a second sheet of material or reinforcing fibrous materials, or both. In the case of laminates, any deficiencies in physical properties of one of the materials can be corrected by selecting desirable properties in the other materials. For example, a film having good forming properties and smoothness such as polyolefin film may be combined with fibers or films having high stretch or tear resistance.

The films employed may be composed of suitable thermoplastic polymers such as polyesters, polyamide, polyolefins or the like, or combinations of the foregoing. The fiberous materials may include thermoplastic woven or unwoven (mesh, spunbonded or the like) fibers or yarns, which are laminated, bonded or otherwise incorporated into the film. Since the fibers are normally used to impart strength and stretch resistance to the film, the fibers preferably are composed of materials such as polyesters or those polyamids or other thermoplastic polymers that have high stretch resistance while retaining flexibility. For example, a polyamid, polyolefin or polyester film 2 may be laminated on one or both sides with fiber reinforcement, such as with yarns made of polyesters. The yarns, shown in Figure 1 at 3 and 4, may be employed in an intersecting or non-intersecting pattern. To facilitate construction, the fibers may be uniformly distributed, or in the alternative, may be oriented to selectively reinforce certain portions of the sail, such as the yarns 4 extending essentially parallel along the leach 6 or the foot 5 of the sail, or concentrated at the corners 7, 8 and 9.

The composite sheet is formed into a three dimensional shape of desired configuration by the use of a stretch forming technique. Many such techniques are conventional and include the steps of first stretching or supporting the sheet under tension at opposite edges, which prevents wrinkles or creases in the final product. The sheet is then permanently deformed into the three dimensional shape shown in Figures 2 and 3, either by stretching and heating the sheet over a curved caul or form, or preferably with the use of external heating and the application of pressure against the sheet by other means. The formed sheet is then cooled to render it shape-retaining.

In order to make a sail having the desired degree of draft or shape, the material is elongated in the order of from about one to about 15 percent per unit length. Heat is preferably applied to render the deformation permanent and prevent shrinkage if the sail is later exposed to warm conditions such as sunlight. Also, in order to achieve the precise shape, pressure is applied to the sheet either by using a molding caul or mold, air pressure, or vacuum. The heat may be applied from a radient source or by bringing the sheet into contact with a heated object.

The temperatures employed to heat the sheet are preferably above normally encountered ambient temperatures and below temperatures that would cause the sheet or any component thereof to degrade, melt or lose other desired physical properties such as stretch resistance. In the specific case of the materials described herein, a temperature range of from about 50 to about 200 degrees C will be sufficient to facilitate permanent stretch forming. The amount of pressure employed is not critical, although higher pressures generally allow for the use of lower temperatures. The amount of dwell time for the forming process is likewise not critical, as long as the material will be permanently deformed after cooling.

Many methods are available for stretch forming the sheet. The material may be supported and inflated using air pressure alone or with the assistance of a flexible supporting membrane. The material may be supported, heated, and pulled over a mold and allowed to cool, or the mold may be separately heated and cooled. The material may be stretched by using air pressure either alone or in combination with a mold surface. In all cases, however, the edges of the sheet are supported while it is being heated and formed to provide a smooth surface on the resulting formed sheet.

The forming operation causes the thermoplastic sheet material and thermoplastic fibers to be permanently elongated, principally behind the luff or in the central portion of the sail. The degree and location of the shaping can be controlled, for example, by using a mold surface that has the shape desired in the final product. After the sheet has been cooled, the free edges may be trimmed.

Other structural elements, such as reinforcing for the corners, battens 10, mast attachment sleeve 1, and the like, may be incorporated either before, during or after formation of the sail by known laminating or bonding operations.

**Claims**

1. A sail for sailing craft having a three dimensional curvature for generating the forward drive for the sailing craft, characterized by a major portion of the area of the sail comprising a continuous sheet of flexible thermoplastic material (2), said material having been permanently deformed into the three dimensional curvature corresponding to the desired curvature under sailing conditions.

2. The sail according to Claim 1, wherein said material (2) has been permanently deformed by stretch forming.

3. The sail according to Claim 1 and 2, wherein said sheet is a reinforced or unreinforced thermoplastic foil or film (2).

4. The sail according to Claim 1 and 3 wherein said sheet material (2) is reinforced by thermoplastic fiberous materials (3, 4).

5. The sail according to Claim 4, wherein said fiberous materials are in the form of yarns (3, 4).

6. The sail according to Claim 4, wherein said fiberous materials are in the form of a mesh.

7. The sail according to Claim 5, wherein said yarns (3, 4) are provided in an intersecting pattern.

8. The sail according to Claim 7, wherein said yarns (3, 4) are woven.

9. The sail of Claim 1, wherein said flexible thermoplastic material (2) is selected from the group consisting of polyesters, polyamids and polyolefins.

10. The sail of Claim 1, wherein said continuous sheet (2) comprises a plurality of layers of thermoplastic material bonded together.

11. A method for making a sail comprising the steps of supporting a continuous sheet of thermoplastic material (2) around its edges, heating the sheet to a temperature below its melting point, applying pressure to the heated sheet to selectively stretch the sheet into the form of a sail and cooling the sheet to leave a curved portion therein.

12. The method of Claim 11, wherein the sheet (2) is stretched from about one to about 15 percent per unit length.

13. The method of Claim 11, wherein the sheet (2) is heated to a temperature of from about 50 to about 200 degrees C.

14. The method of Claim 11, wherein the sheet (2) is reinforced with thermoplastic polymer fibers (3, 4).

15. The method of Claim 14, wherein said sheet (2) and fibers (3, 4) are selected from a class of thermoplastic polymers consisting of polyesters, polyamids, polyolefins and combinations thereof.

## Revendications

1. Voile pour embarcation à voile possédant une courbure tridimensionnelle afin de produire la force de propulsion pour l'embarcation, caractérisée en ce que la majeure partie de l'aire de la voile est constituée de ou comprend une feuille continue (2) de matériau thermoplastique flexible, ce matériau ayant été déformé de façon permanente pour avoir la courbure tridimensionnelle correspondant à la courbure désirée à la marche.

2. Voile selon la revendication 1, dans laquelle le matériau (2) a été déformé de façon permanente au moyen d'un formage par étirage.

3. Voile selon les revendications 1 et 2, dans laquelle la feuille est une pellicule ou un film (2) de matériau thermoplastique renforcé ou non renforcé.

4. Voile selon les revendications 1 et 3, dans laquelle le matériau (2) de la feuille est renforcé par des matériaux thermoplastiques fibreux (3, 4).

5. Voile selon la revendication 4, dans laquelle les matériaux fibreux se présentent sous forme de fils (3, 4).

6. Voile selon la revendication 4, dans laquelle les matériaux fibreux se présentent sous forme d'un filet.

7. Voile selon la revendication 5, dans laquelle les fils (3, 4) forment un motif où les fils se croisent.

8. Voile selon la revendication 7 dans laquelle les fils (3, 4) sont tissés.

9. Voile selon la revendication 1, dont le matériau thermoplastique flexible (2) est choisi du groupe comprenant les polyesters, polyamides et polyoléfines.

10. Voile selon la revendication 1, dont la feuille continue (2) est constituée de plusieurs couches de matériau thermoplastique liées ensemble.

11. Procédé pour fabriquer une voile, comprenant la tenue d'une feuille continue de matériau thermoplastique (2) tout au long de ses bords, le chauffage de la feuille à une température inférieure à son point de fusion, l'application de pression à la feuille chauffée pour étirer la feuille sélectivement dans la forme d'une voile et le refroidissement de la feuille, de manière à laisser subsister une partie courbe.

12. Procédé selon la revendication 11, où la feuille (2) est étirée d'environ un à environ 15% par unité de longueur.

13. Procédé selon la revendication 11, où la feuille (2) est chauffée à une température d'environ 50 à environ 200°C.

14. Procédé selon la revendication 1, où la feuille (2) est renforcée par des fibres (3, 4) d'un polymère thermoplastique.

15. Procédé selon la revendication 14, où la feuille (2) et les fibres (3, 4) sont choisies dans une classe de polymères thermoplastiques comprenant des polyesters, polyamides, polyoléfines et des combinaisons de ceux-ci.

## Patentansprüche

1. Segel für ein Segelfahrzeug, welches eine dreidimensionale Wölbung für die Erzeugung des Vortriebs des Segelfahrzeugs hat, gekennzeichnet durch einen größeren Teil der Segelfläche, der ein kontinuierliches Flächenstück aus flexiblem thermoplastischen Material (2) aufweist, welches Material dauerhaft in die dreidimensionale Wölbung entsprechend der unter Segelbedingungen gewünschten Wölbung verformt ist.

2. Segel nach Anspruch 1, dadurch gekennzeichnet, daß das Material (2) dauerhaft durch Streckverformung verformt ist.

3. Segel nach den Ansprüchen 1 und 2, dadurch gekennzeichnet, daß das Flächenstück eine verstärkte oder unverstärkte thermoplastische Folie oder ein verstärkter oder unverstärkter thermoplastischer Film (2) ist.

4. Segel nach den Ansprüchen 1 und 3, dadurch gekennzeichnet, daß das Flächenstückmaterial (2) durch thermoplastische Fasermaterialien (3, 4) verstärkt ist.

5. Segel nach Anspruch 4, dadurch gekennzeichnet, daß die Fasermaterialien die Form von Garnen (3, 4) haben.

6. Segel nach Anspruch 4, dadurch gekennzeichnet, daß die Fasermaterialien in Netzform angeordnet sind.

7. Segel nach Anspruch 5, dadurch gekennzeichnet, daß die Garne (3, 4) in einem sich überschneidenden Muster angeordnet sind.

8. Segel nach Anspruch 7, dadurch gekennzeichnet, daß die Garne (3, 4) verwebt sind.

9. Segel nach Anspruch 1, dadurch gekennzeichnet, daß das flexible thermoplastische Material (2) aus der Gruppe ausgewählt ist, die Polyester, Polyamide und Polyolefine enthält.

10. Segel nach Anspruch 1, dadurch gekennzeichnet, daß das kontinuierliche Flächenstück (2) eine Mehrzahl von miteinander verbundenen Schichten aus thermoplastischem Material aufweist.

11. Verfahren zur Herstellung eines Segels, welches folgende Herstellungsstufen enthält: Abstützung eines kontinuierlichen Flächenstückes aus thermoplastischem Material (2) entlang seiner Ränder, Erhitzung des Flächenstücks auf eine Temperatur unterhalb seines Schmelzpunktes, Druckausübung auf das erhitzte Flächenstück für eine selektive Streckung desselben in die Form eines Segels und Abkühlung des Flächenstückes für das Beibehalten eines gewölbten Teils in ihm.

12. Verfahren nach Anspruch 11, dadurch gekennzeichnet, daß das Flächenstück (2) zwischen 1 und 15 % je Längeneinheit gestreckt wird.

13. Verfahren nach Anspruch 11, dadurch gekennzeichnet, daß das Flächenstück (2) auf eine Temperatur von 50 bis 200°C erhitzt wird.

14. Verfahren nach Anspruch 11, dadurch gekennzeichnet, daß das Flächenstück (2) mit thermoplastischen Polymerfasern (3, 4) verstärkt wird.

15. Verfahren nach Anspruch 14, dadurch gekennzeichnet, daß das Flächenstück (2) und die Verstärkungsfasern ausgewählt werden aus der Klasse von thermoplastischen Polymeren, welche Polyester, Polyamide, Polyolefine und Kombinationen hiervon enthalten.

FIG. 1

FIG. 2

FIG. 3